# EUROPEAN PATENT APPLICATION

(11) **EP 4 301 039 A1**
(43) Date of publication of application: **03.01.2024**
(21) Application number: 21949917.5
(22) Date of filing: 14.10.2021
(51) Int. Cl.: H04W 36/00, H04W 36/30, H04W 36/32

(54) **PRIVATE NETWORK AND PUBLIC NETWORK SWITCHING METHOD BASED ON CLOUD COMMUNICATION, AND CLOUD COMMUNICATION TERMINAL**

(30) Priority: 14.07.2021 CN 202110792366
(71) Applicant: Shanghai Tuge Data Technologies Co., Ltd., Shanghai 201304 (CN)
(72) Inventor: LV, Tianming, Shanghai 201304 (CN); ZHOU, Linlin, Shanghai 201304 (CN); WANG, Kaihang, Shanghai 201304 (CN); ZHOU, Hao, Shanghai 201304 (CN)
(74) Representative: Wang, Bo
(86) International application number: PCT/CN2021/123682
(87) International publication number: WO 2023/284144

(57) **Abstract**

The present disclosure relates to a method for handover between a private network and a public network based on cloud communications, and a cloud communication terminal. The method includes: receiving, by a cloud communication server, measurement information reported by a cloud communication terminal, the measurement information including measurement information of all networks within a location of the cloud communication terminal; determining, based on the measurement information and a network used by the cloud communication terminal, whether the cloud communication terminal satisfies a network handover condition; in response to determining that the cloud communication terminal satisfies the network handover condition, assigning a cloud SIM card to the cloud communication terminal, such that the cloud communication terminal establishes a data connection in a target network based on the cloud SIM card; and in response to receiving information indicative of successful establishment of the data connection in the target network from the cloud communication terminal, releasing a cloud SIM card used by the cloud communication terminal in a source network. The method effectively reduces communication costs of the cloud communication terminal while ensuring communication quality of the cloud communication terminal.

## Description

### TECHNICAL FIELD

The present disclosure relates to the technical field of communications, and in particular, relates to methods for handover between public networks and private networks based on cloud communications, a cloud communication terminal, and a cloud communication server.

### BACKGROUND

Public networks are public wireless communication networks provided by telecommunications operator, for example, GSM or EASYOWN services of China Mobile. Private networks are dedicated wireless communication networks, for example, trunked mobile communication networks in public security systems.

In the related art, a plurality of methods for handover between a public network and a private network are available, for example, an electric power wireless communication terminal device and an adaption method compatible with both a 4G public network and a 5G public network, a dual-mode communication method, terminal and system for a public network and a private network, and the like.

These methods are deficient in that the 4G public network and the 5G public network are accessed using dual SIM cards, and only one private network and one public network can be used, for example, a 5G public network. In this case, the communication terminal is out of the network coverage in the case of a failure of the 5G public network.

The dual-mode communication method for the public network and the private network relies on the SIM card, and the number of private networks or public networks that are accessible by a dual-network and single-standby or dual-network or dual-standby terminal does not exceed two.

Apparently, the above methods fail to consider busyness of the currently used network, and fails to ensure service quality of the terminal. Accordingly, during handover between the private network and the public network, how to reduce communication costs of the terminal while ensuring communication quality of the terminal is a technical problem to be urgently solved.

### SUMMARY

In view of the above deficiencies and drawbacks, the present disclosure provides a method for handover between a private network and a public network based on cloud communications, and a cloud communication terminal, which effectively reduces communication costs of the cloud communication terminal while ensuring communication quality of the cloud communication terminal during handover between the two networks.

To achieve the above objectives, the present disclosure provides the following technical solutions.

In a first aspect, embodiments of the present disclosure provide a method for handover between a private network and a public network based on cloud communications. The method includes:
101, receiving, by a cloud communication server, measurement information reported by a cloud communication terminal;
102, determining, by the cloud communication server based on the measurement information and a network used by the cloud communication terminal, whether the cloud communication terminal satisfies a network handover condition;
103, in response to determining that the cloud communication terminal satisfies the network handover condition, assigning, by the cloud communication server, a cloud SIM card to the cloud communication terminal, such that the cloud communication terminal establishes a data connection in a target network based on the cloud SIM card; and
104, in response to receiving information indicative of successful establishment of the data connection in the target network from the cloud communication terminal, releasing, by the cloud communication server, a cloud SIM card used by the cloud communication terminal in a source network;
wherein the cloud communication terminal is provided with an authentication card for sending authentication information and at least one cloud SIM card for data communication.

Optionally, when the source network is the public network and the target network is the private network,
receiving, by the cloud communication server, the measurement information reported by the cloud communication terminal includes:
receiving, by the cloud communication server, measurement information of the public network reported by the cloud SIM card; and/or
receiving, by the cloud communication server, measurement information of the public network reported by the authentication card;
wherein the measurement information includes cell location information and signal strength.

Optionally, when the source network is the public network and the target network is the private network,
determining, by the cloud communication server based on the measurement information and the network used by the cloud communication terminal, whether the cloud communication terminal satisfies the network handover condition includes:
1021, determining, by the cloud communication server based on cell location information in the measurement information, whether the cloud communication terminal is within a coverage area of the private network, and
1022, in response to determining that the cloud communication terminal is within the coverage area of the private network, determining, by the cloud communication server, that the cloud communication terminal satisfies the network handover condition; or
102-1, determining, by the cloud communication server based on the cell location information in the measurement information, whether the cloud communication terminal is within the coverage area of the private network,
102-2, in response to determining that the cloud communication terminal is within the coverage area of the private network, acquiring, by the cloud communication server, measurement information of the private network reported by the cloud communication terminal, and
102-3, determining, by the cloud communication server, signal strength in the measurement information of the private network is greater than a first strength value/signal strength in measurement information of the public network, and determining, by the cloud communication server, that the cloud communication terminal satisfies the network handover condition in response to determining that the signal strength is greater than the first strength value/the signal strength in the measurement information.

Optionally, determining, by the cloud communication server based on the cell location information in the measurement information, whether the cloud communication terminal is within the coverage area of the private network includes:
1020a, in response to determining, based on the cell location information in the measurement information, that the cloud communication terminal is within a peripheral zone of the coverage area of the private network, sending to the cloud communication terminal, by the cloud communication server, information of a first time interval for reporting the measurement information,
1020b, receiving, by the cloud communication server, the measurement information reported by the cloud communication terminal based on the first time interval, and sending, to the cloud communication terminal, information of a second time interval for reporting the measurement information in response to determining, based on the measurement information, that the cloud communication terminal is within a critical zone between a coverage area of the public network and the coverage area of the private network,
1020c, receiving, by the cloud communication server, the measurement information reported by the cloud communication terminal based on the second time interval, and sending, to the cloud communication terminal, information of a third time interval for reporting the measurement information in response to determining, based on the measurement information, that the cloud communication terminal is within an edge zone of the coverage area of the private network, and
1020d, receiving, by the cloud communication server, the measurement information reported by the cloud communication terminal based on the third time interval, and determining, based on the measurement information, whether the cloud communication terminal is within the coverage area of the private network,
wherein the first time interval is greater than the second time interval, and the second time interval is greater than the third time interval; or
1020a', in response to determining, based on the cell location information in the measurement information, that the cloud communication terminal is within a peripheral zone of the coverage area of the private network, sending to the cloud communication terminal, by the cloud communication server, information of a first time interval for reporting the measurement information,
1020b', receiving, by the cloud communication server, the measurement information reported by the cloud communication terminal based on the first time interval, and sending, to the cloud communication terminal, information of a second time interval for reporting the measurement information in response to determining, based on the measurement information, that the cloud communication terminal is within a critical zone between the coverage area of the public network and the coverage area of the private network, and
1020c', receiving, by the cloud communication server, the measurement information reported by the cloud communication terminal based on the second time interval, and determining, based on the measurement information, whether the cloud communication terminal is within the coverage area of the private network.

Optionally, when the source network is the private network and the target network is the public network,
receiving, by the cloud communication server, the measurement information reported by the cloud communication terminal includes:
receiving, by the cloud communication server, measurement information of the private network reported by the cloud SIM card; and/or
receiving, by the cloud communication server, measurement information of the public network reported by the authentication card;
wherein the measurement information includes cell location information and signal strength.

Optionally, when the source network is the private network and the target network is the public network,
determining, by the cloud communication server based on the measurement information and the private network used by the cloud communication terminal, whether the cloud communication terminal satisfies the network handover condition includes:
determining, by the cloud communication server based on the cell location information in the measurement information, whether the cloud communication terminal is within an edge zone of a coverage area of the private network;
in response to determining that the cloud communication terminal is within the edge zone of the coverage area of the private network, sending, by the cloud communication server, a first request for acquiring QoS information to the cloud communication terminal, and acquiring the QoS information acquired by the cloud communication terminal based on the first request; and
determining, by the cloud communication server, whether the QoS information is greater than a predetermined threshold, and determining that the cloud communication terminal satisfies the network handover condition in response to determining that the QoS information is not greater than the predetermined threshold.

Optionally, the method further includes:
in response to a failure to receive the information indicative of the successful establishment of the data connection in the target network fed back by the cloud communication terminal within a first predetermined time period upon assignment of the cloud SIM card, sending to the cloud communication terminal, by the cloud communication server, information indicative of enabling a cloud SIM card for data communication in the source network to establish a data connection in the source network, such that the cloud communication terminal continuously uses the source network; and
suspending, by the cloud communication server, the cloud SIM card for data communication in the source network in the cloud communication terminal prior to successful network handover of the cloud communication terminal.

Optionally, the method further includes:
stopping, by the cloud communication server, network handover within a second predetermined time period upon a failure of network handover.

In a second aspect, embodiments of the present disclosure further provide a method for handover between a private network and a public network based on cloud communications. The method includes:
periodically reporting, by a cloud communication terminal, measurement information to a cloud communication server, such that the cloud communication server determines, based on the measurement information and a network used by the cloud communication terminal, whether the cloud communication terminal satisfies a network handover condition;
in response to determining that the cloud communication terminal satisfies the network handover condition, receiving, by the cloud communication terminal, network handover information from the cloud communication server, wherein the network handover information contains a cloud SIM card for data communication in a target network; and
establishing, by the cloud communication terminal, a data connection in the target network based on the cloud SIM card, and sending information indicative of successful establishment of the data connection to the cloud communication server upon the successful establishment of the data connection, such that the cloud communication server releases a cloud SIM card used by the cloud communication terminal in a source network;
wherein the cloud communication terminal is provided with an authentication card for sending authentication information and at least one cloud SIM card for data communication.

Optionally, when the source network is the public network and the target network is the private network,
periodically reporting, by the cloud communication terminal, measurement information to the cloud communication server includes:
in response to approaching a coverage area of the private network, receiving, by the cloud communication terminal, information of an n^{th} time interval for reporting the measurement information from the cloud communication server, and reporting the measurement information to the cloud communication server based on the n^{th} time interval, wherein the n^{th} time interval is determined by the cloud communication server according to a distance between a cell where the cloud communication terminal is located and a coverage area of the private network.
n is a natural number greater than 0.

Optionally, when the source network is the private network and the target network is the public network,
upon periodically reporting, by the cloud communication terminal, the measurement information to the cloud communication server, the method further includes:
in response to determining that the cloud communication terminal is within an edge zone of a coverage area of the private network, receiving from the cloud communication server, by the cloud communication terminal, a first request for acquiring QoS information, and interacting with the cloud communication server based on the first request, such that the cloud communication server acquires the QoS information of a data connection of the cloud communication terminal and the cloud communication server determines, based on the QoS information, whether the cloud communication terminal satisfies the network handover condition.

Optionally, the method further includes:
establishing, by the cloud communication terminal, the data connection in the target network based on the cloud SIM card, and in response to a failure to establish the data connection, receiving, from the cloud communication server, information indicative of enabling a cloud SIM card for data communication in the source network to establish a data connection in the source network; and
establishing, by the cloud communication terminal, the data connection in the source network based on the cloud SIM card in the information;
wherein the cloud SIM card for data communication in the source network is a card suspended by the cloud communication server prior to successful network handover of the cloud communication terminal.

In a third aspect, embodiments of the present disclosure further provide a cloud communication server. The cloud communication server includes: a memory, a processor, and a card pool; wherein
one or more programs are stored in the memory, the processor is configured to run the one or more programs stored in the memory, a plurality of cloud SIM cards are stored in the card pool, and the cloud SIM cards are called and assigned by the processor to the cloud communication terminal for data communication in a target network; and
the processor, when loading and running the one or more programs, is caused to perform the method as described in the first aspect.

In a fourth aspect, embodiments of the present disclosure further provide a cloud communication terminal. The cloud communication terminal includes: a memory and a processor; wherein
one or more programs are stored in the memory, and the processor, when loading and running the one or more programs stored in the memory, is caused to perform the method as described in the second aspect.

The present disclosure achieves the following beneficial effects:
By the method according to the present disclosure, handover between the private network and the public network is implemented using the cloud SIM card, and a plurality of private networks and a plurality of public networks are seamlessly connected. In this way, networking of the private network and the public network is achieved without reaching any roaming protocol between the private network and the public network.

In one aspect, the network provided by a private network base station is used based on the cloud communications technologies. The cloud communication terminal is handed over to the private network in response to entering the coverage area of the private network, and is handed over to the public network in response to exiting the coverage area of the private network. In this way, networking costs of the public network and communication costs of the cloud communication terminal are reduced.

In another aspect, where quality of the private network fails to satisfy a predetermined QoS, the cloud communication terminal is handed over from the private network to the public network based on the cloud communications. In this way, communication quality is ensured, and hence network quality perceived by users is improved.

Therefore, the method according to the present disclosure effectively reduces communication costs of the cloud communication terminal while ensuring communication quality of the cloud communication terminal in handover from the private network to the public network.

### BRIEF DESCRIPTION OF THE DRAWINGS

FIG. 1 is a schematic diagram of coverage areas of a public network and a private network;
FIG. 2 is a schematic flowchart of a method for handover between a private network and a public network based on cloud communications according to an embodiment of the present disclosure;
FIG. 3A, FIG. 3B, FIG. 3C, and FIG. 4 are schematic flowcharts of methods for handover between a private network and a public network based on cloud communications according to an embodiment of the present disclosure; and
FIG. 5 is a schematic structural diagram of a communication device according to an embodiment of the present disclosure.

### DETAILED DESCRIPTION

For better explanation and understanding of the present disclosure, the present disclosure is described in detail with reference to exemplary embodiments and accompanying drawings.

Some exemplary embodiments of the present disclosure are hereinafter described in detail with reference to the accompanying drawings for better illustration of the technical solutions. Although the accompanying drawings illustrate the exemplary embodiments of the present disclosure, it shall be understood that the present disclosure may be practiced in various manners, and the present disclosure shall not be limited by the embodiments illustrated herein. On the contrary, these embodiments are described herein only for clearer and more thorough understanding of the present disclosure, and may integrally convey the scope of the present disclosure to a person skilled in the art.

In the related art, a terminal only supports one entity card, and within a specified time period, and the terminal only supports one public network operator. In this case, in the case of handover between a public network and a private network, the fact how busy the network currently used by the terminal is not considered, and thus quality of service (QoS) of the terminal is not ensured.

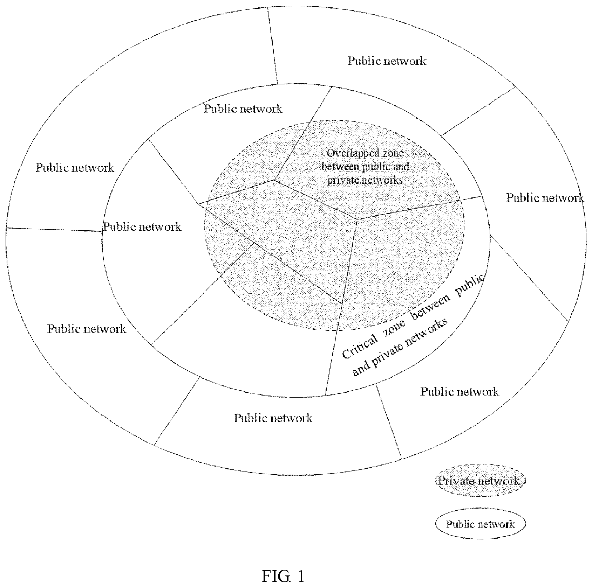

At present, enterprises meet their needs by constructing LTE or 5G private networks. Due to cost limitations, the private network fails to reach the coverage area of a public network, and the construction of the private network lags behind the public network. FIG. 1 illustrates coverage areas of a public network and a private network respectively.

In embodiments of the present disclosure, based on cloud communications, in places covered by the private network, a cloud communication server assigns a private network cloud SIM card to a cloud communication terminal, such that the cloud communication terminal accesses the private network (or accesses the private network via VPN); and in places not covered by the private network or places with degraded service quality, the cloud communication server assigns a public network cloud SIM card to the cloud communication terminal, such that the cloud communication terminal is handed over from the private network to the public network, and hence the cloud communication terminal enlarges the range of use of the private network.

It should be noted that in the embodiments hereinafter, the cloud communication terminal is provided with an authentication card for sending authentication information and at least one cloud SIM card for data communication. In these embodiments, the authentication card may be an entity SIM card or a key identifier (Ki) card which is for local authentication. Ki is a key for encrypting data to be transmitted between a SIM card and an operator. The Ki card may be considered as a virtual SIM card, which is authenticated by local operations in the terminal instead of being authenticated by cloud computations.

The authentication card may be referred to as an activation soft card, and is employed to send authentication information inside the cloud communication terminal, and report measurement information where data connection of a cloud SIM card (that is, a data card/data cloud card) fails.

### First Embodiment

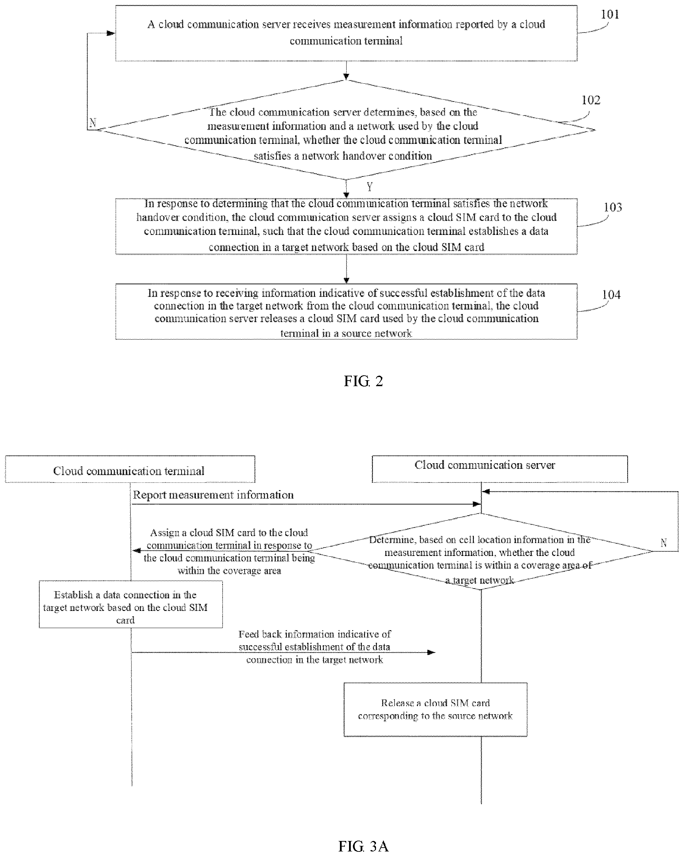

FIG. 2 illustrates a schematic flowchart of a method for handover between a private network and a public network based on cloud communications according to an embodiment of the present disclosure. The method may be performed at a cloud communication server, and may include the following steps.

At 101, a cloud communication server receives measurement information reported by a cloud communication terminal.

In this embodiment, the measurement information may include measurement information of more than one network within a location of the cloud communication terminal.

For example, the measurement information may include: public land mobile network (PLMN); network mode; cell location information; 4G/5G tracking area code (TAC), E-UTRAN cell identifier (ECI); 2G/3G local area code (LAC), cell identifier (CI); signal strength, frequency band, frequency point, and the like.

At 102, the cloud communication server determines, based on the measurement information and a network used by the cloud communication terminal, whether the cloud communication terminal satisfies a network handover condition.

At 103, in response to determining that the cloud communication terminal satisfies the network handover condition, the cloud communication server assigns a cloud SIM card to the cloud communication terminal, such that the cloud communication terminal establishes a data connection in a target network based on the cloud SIM card.

At 104, in response to receiving information indicative of successful establishment of the data connection in the target network from the cloud communication terminal, the cloud communication server releases a cloud SIM card used by the cloud communication terminal in a source network.

It should be noted that in this embodiment, in response to a failure to receive the information indicative of the successful establishment of the data connection in the target network fed back by the cloud communication terminal within a first predetermined time period upon assignment of the cloud SIM card, the cloud communication server sends, to the cloud communication terminal, information indicative of enabling a cloud SIM card for data communication in the source network to establish a data connection in the source network, such that the cloud communication terminal continuously uses the source network.

The cloud communication server suspends the cloud SIM card for data communication in the source network in the cloud communication terminal prior to successful network handover of the cloud communication terminal. That is, the cloud SIM card is not released, but is suspended and released upon receipt of the information indicative of successful establishment of the data connection in the target information from the cloud communication terminal.

In addition, the cloud communication server stops network handover within a second predetermined time period upon a failure of network handover.

In this embodiment, the first predetermined time period and the second predetermined time period are both information predetermined by the cloud communication server according to actual needs.

In practice, the cloud communication server may issue a handover command over a data connection channel of the source network. The handover command includes a newly assigned cloud SIM card in the target network. In this case, the cloud communication server suspends the cloud SIM card in the source network. That is, the cloud communication terminal stores an original unused cloud SIM card therein. The cloud communication terminal performs, based on the newly assigned cloud SIM card in the target network, network searching, network camping, authentication, and data connection establishment, to complete handover.

When the network of the cloud communication terminal is handed over successfully, the cloud communication server sends information indicative of successful network handover to the cloud communication server, such that the cloud communication server notifies a card pool of the successful network handover, releases the cloud SIM card corresponding to the source network, and provides the cloud SIM card to other cloud communication terminals.

When the cloud communication terminal is handed over to the target network, where the data connection fails to be successfully established within a specified time period T301, it is determined that the network handover fails. The cloud communication server sends a notification of enabling the suspended cloud SIM card to the cloud communication terminal over a data channel of an authentication card, and hence the cloud communication terminal uses the cloud SIM card in the source network suspended therein. In this case, the cloud communication server may enable a handover failure timer T302. Within timing of the timer, even if it is determined based on the measurement information that the handover condition is satisfied, the handover is not performed. Instead, upon expiration of the timer, whether the handover condition is satisfied is determined again based on the measurement information reported by the cloud communication terminal. Nevertheless, in this case, a new cloud SIM card corresponding to the target network may be released, such that other cloud communication terminals may use the released cloud SIM card.

In practice, upon the handover, the cloud communication terminal is quickly handed over back to the original network to prevent signal fluctuations. In this case, a timer T401 for preventing ping-pang handover is defined. During timing of the timer T401, even if the measurement information reported by the cloud communication terminal indicates that a new network handover condition is satisfied, whether the handover condition is satisfied is still not performed but is determined upon expiration of the timer T401.

The timers T301, T302, and T401 are all durations predefined in the cloud communication server.

In this embodiment, based on the cloud communications technology, the private network and the public network are connected to implement seamless transition between the private network and the public network. This further ensures communication quality of the cloud communication terminal while enlarging the scope of use of the cloud communication terminal, such that costs are effectively reduced.

By the method according to the present disclosure, handover between the private network and the public network is implemented using the cloud SIM card, and a plurality of private networks and a plurality of public networks are seamlessly connected. In this way, networking of the private network and the public network is achieved without reaching any roaming protocol between the private network and the public network.

### Second Embodiment

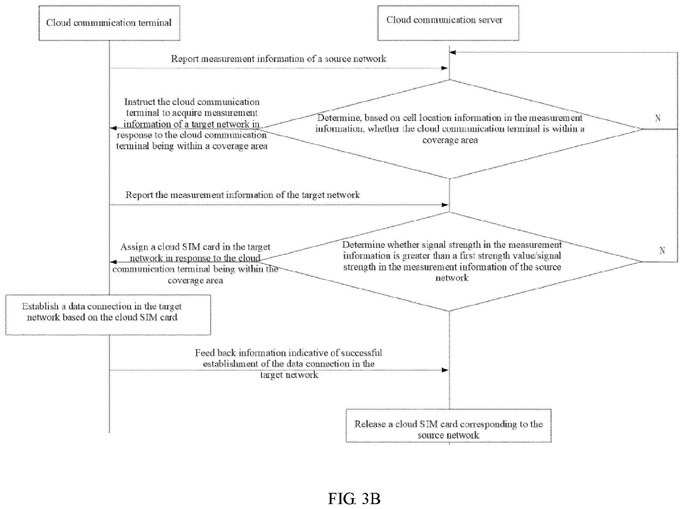

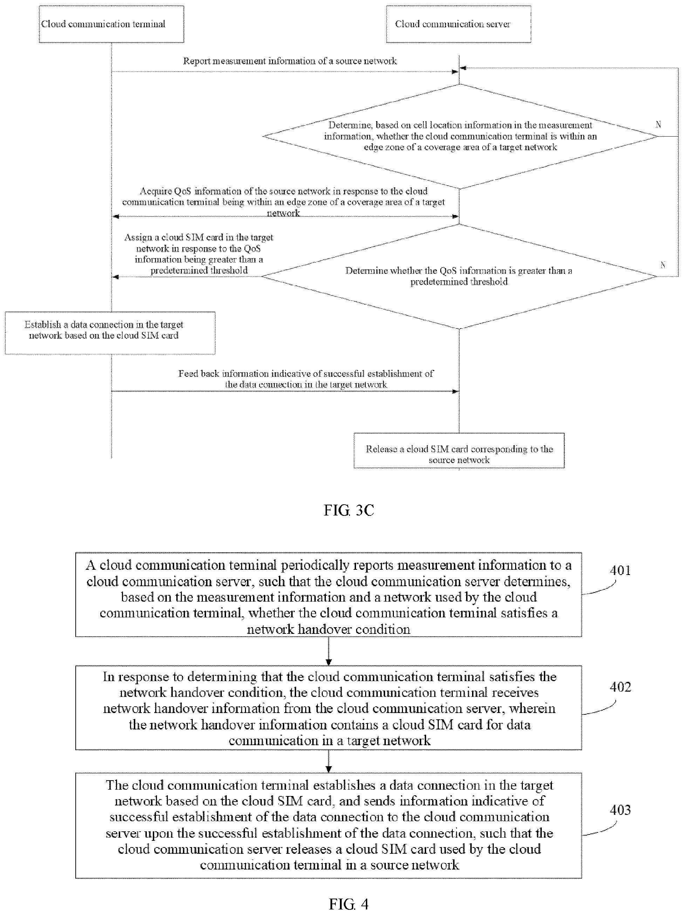

Hereinafter, the network handover according to the present disclosure is described in detail with reference to FIG. 3A, FIG. 3B, and FIG. 3C.

FIG. 3A illustrates a schematic flowchart of handover from a public network to a private network.

As illustrated in FIG. 3A, when the source network is the public network and the target network is the private network, the cloud communication terminal periodically reports the measurement information, for example, cell location information reported at intervals of a time period (T). The cloud communication server determines whether the network handover condition is satisfied in response to detecting that the cloud communication terminal reaches a coverage area of a base station of the private network based on the reported cell location information and background database matching information.

In response to determining that the network handover is needed, the cloud communication server assigns a cloud SIM card registrable in the private network to the cloud communication terminal. Where the cloud SIM card is normal, registration shall be successful within 1 minute. Upon successful registration, the cloud communication terminal returns a message indicative of successful establishment of a data connection to the cloud communication server. In this case, the cloud communication server releases the cloud SIM card used by the cloud communication terminal in the public network.

At 301, the cloud communication server receives measurement information reported by the cloud communication terminal.

The source network is the public network and the target network is the private network. The measurement information may include:
receiving, by the cloud communication server, measurement information of the public network reported by the cloud SIM card; and/or receiving, by the cloud communication server, measurement information of the private network reported by the authentication card.

The measurement information may include: cell location information; signal strength; public land mobile network (PLMN); network mode; 4G/5G tracking area code (TAC), E-UTRAN cell identifier (ECI); 2G/3G local area code (LAC), cell identifier (CI); frequency band; frequency point; and the like.

In practice, the cloud communication terminal reports the measurement information using the cloud SIM card for data communication. Where the data connection of the cloud SIM card is interrupted, the cloud communication terminal is connected to the public network using the authentication card and reports the measurement information.

At 302, the cloud communication server determines, based on the cell location information in the measurement information, whether the cloud communication terminal is within a coverage area of the private network, and

For example, in response to determining that the cloud communication terminal has approached the base station of the private network, the cloud communication server notifies the cloud communication terminal that a cycle of reporting the measurement information may be shortened. In this way, when the cloud communication terminal reaches the coverage area of the base station of the private network, the cloud communication server determines whether the network handover condition is satisfied.

When the data connection is present in the public network, a specific zone wherein the cloud communication terminal enters is determined based on the measured cell location information, signal strength (also referred to as reference signal received power, RSRP) and the like periodically reported by the authentication card and the cloud SIM card of the cloud communication terminal. When the cloud communication terminal is in a peripheral zone of the public network, measurement is performed based on the timing of the timer T101, and measurement information is reported. When the cloud communication terminal enters a critical zone between the public network and the private network, the timing for measurement is shortened, measurement is performed based on the timing of the timer T103, and measurement information is reported. When the cloud communication terminal enters an overlapped zone between the public network and the private network, measurement is performed based on the timing of the timer T103, and measurement information is reported.

The timing for measurement may be defined at the background and issued to the cloud communication terminal for execution. With respect to the timing for measurement, T101 is the longest, then T102, and T103 is the shortest.

At 303, in response to determining that the cloud communication terminal is within the coverage area of the private network, the cloud communication server determines that the cloud communication terminal satisfies the network handover condition.

At 304, in response to determining that the cloud communication terminal satisfies the network handover condition, the cloud communication server assigns a cloud SIM card to the cloud communication terminal, such that the cloud communication terminal establishes a data connection in a target network based on the cloud SIM card.

At 305, in response to receiving information indicative of successful establishment of the data connection in the target network from the cloud communication terminal, the cloud communication server releases a cloud SIM card used by the cloud communication terminal in a source network.

In this embodiment, whether the cloud communication terminal is within the coverage area of the private network is determined based on the cell location information reported by the cloud communication terminal, such that blind handover from the public network to the private network is implemented. Within the coverage area of the private network, the private network is preferentially used, which reduces communication expenses.

In another possible implementation, the method for handover between the private network and the public network based on cloud communications according to this embodiment may include the following steps, as illustrated in FIG. 3B.

At 310, the cloud communication server receives measurement information reported by the cloud communication terminal.

At 311, the cloud communication server determines, based on cell location information in the measurement information, whether the cloud communication terminal is within a coverage area of the private network.

For example, in response to determining that the cloud communication terminal has approached the base station of the private network, the cloud communication server notifies the cloud communication terminal that a cycle of reporting the measurement information may be shortened. In this way, when the cloud communication terminal reaches the coverage area of the base station of the private network, the cloud communication server determines whether the network handover condition is satisfied.

At 312, in response to determining that the cloud communication terminal is within the coverage area of the private network, the cloud communication server acquires measurement information of the private network reported by the cloud communication terminal.

The measurement information includes signal strength (referred to as RSRP in 4G/5G networks, referred to as received signal code power, RSCP in 3G networks, and referred to as Rx level in 2G networks). Upon measurement in the source network, measurement information of the source network is reported. In the case of measurement in an overlapped zone between the source network and the target network, the authentication card is suspended, network information of the target network (that is, measurement information) is measured, and a measurement result is reported over a data channel of the cloud SIM card. Upon completion of measurement, the authentication card resumes to its original state and resumes its data connection. Whether the network handover condition is satisfied is determined based on the measurement result. When the network handover condition is satisfied, a handover attempt is conducted on the cloud SIM card. In response to successful handover, the original cloud SIM card is released; and in response to failed handover, the original cloud SIM card is resumed for use.

At 313, the cloud communication server determines signal strength in the measurement information of the private network is greater than a first strength value/signal strength in measurement information of the public network, and determines that the cloud communication terminal satisfies the network handover condition in response to determining that the signal strength is greater than the first strength value/the signal strength in the measurement information.

At 314, in response to determining that the cloud communication terminal satisfies the network handover condition, the cloud communication server assigns a cloud SIM card to the cloud communication terminal, such that the cloud communication terminal establishes a data connection in a target network based on the cloud SIM card.

At 315, in response to receiving information indicative of successful establishment of the data connection in the target network from the cloud communication terminal, the cloud communication server releases a cloud SIM card used by the cloud communication terminal in a source network.

In this embodiment, whether the cloud communication terminal enters the coverage area of the private network is determined based on the cell location information and the signal strength of the private network reported by the cloud communication terminal. In response to entering the coverage area of the private network, the cloud communication terminal is assigned a cloud SIM card in the private network, and the cloud communication terminal is handed over from the public network to the private network. Within the coverage area of the private network, the private network is preferentially used, which reduces communication expenses.

For example, step 302/step 311 may further include the following sub-steps.

At 3020a', in response to determining, based on the cell location information in the measurement information, that the cloud communication terminal is within a peripheral zone of the coverage area of the private network, the cloud communication server sends, to the cloud communication terminal, information of a first time interval for reporting the measurement information.

At 3020b', the cloud communication server receives the measurement information reported by the cloud communication terminal based on the first time interval, and sends to the cloud communication terminal information of a second time interval for reporting the measurement information in response to determining, based on the measurement information, that the cloud communication terminal is within a critical zone between a coverage area of the public network and the coverage area of the private network.

At 3020c, the cloud communication server receives the measurement information reported by the cloud communication terminal based on the second time interval, and sends to the cloud communication terminal information of a third time interval for reporting the measurement information in response to determining, based on the measurement information, that the cloud communication terminal is within an edge zone of the coverage area of the private network.

At 3020d, the cloud communication server receives the measurement information reported by the cloud communication terminal based on the third time interval, and determines, based on the measurement information, whether the cloud communication terminal is within the coverage area of the private network.

The first time interval is greater than the second time interval, and the second time interval is greater than the third time interval.

In another embodiment, step 302/step 311 may further include the following sub-steps.

At 3020a', in response to determining, based on the cell location information in the measurement information, that the cloud communication terminal is within a peripheral zone of the coverage area of the private network, the cloud communication server sends, to the cloud communication terminal, information of a first time interval for reporting the measurement information.

At 3020b', the cloud communication server receives the measurement information reported by the cloud communication terminal based on the first time interval, and sends to the cloud communication terminal information of a second time interval for reporting the measurement information in response to determining, based on the measurement information, that the cloud communication terminal is within a critical zone between a coverage area of the public network and the coverage area of the private network.

At 3020c', the cloud communication server receives the measurement information reported by the cloud communication terminal based on the second time interval, and determines, based on the measurement information, whether the cloud communication terminal is within the coverage area of the private network.

When the cloud communication terminal is approaching the coverage area of the private network, the frequency of reporting the measurement information by the cloud communication terminal is increased, such that whether the cloud communication terminal is within the coverage area of the private network is determined quickly and effectively. In this way, user experience is improved, and accuracy and efficiency of handover are ensured.

FIG. 3C illustrates a schematic flowchart of handover from a private network to a public network.

At 320, the cloud communication server receives measurement information reported by the cloud communication terminal.

The source network is the private network and the target network is the public network. In this case, the cloud communication server receives measurement information of the public network reported by the cloud SIM card; and/or the cloud communication server receives measurement information of the public network reported by the authentication card. In practice, the authentication card is constantly within the public network, and where the cloud SIM card fails in data communication, the measurement information of the public network is reported using the authentication card.

The measurement information includes: cell location information; signal strength; PLMN; network mode; 4G/5G TAC, ECI; 2G/3G LAC, CI; frequency band; frequency point; and the like.

In practice, the cloud communication terminal reports the measurement information using the cloud SIM card for data communication. Where the data connection of the cloud SIM card is interrupted, the cloud communication terminal establishes the data connection to the public network using the authentication card and reports the measurement information. In this embodiment, the authentication card constantly uses the public network.

Generally, the authentication card only sends information where the cloud SIM card fails in data communication. For example, the authentication card reports the measurement information during data channel handover of the cloud SIM card, or the authentication card reports the measurement information when the cloud SIM card exits the service area. In these two cases, data connections of the cloud SIM card are both interrupted. In an interacted zone between the public network and the private network, the measurement information reported by the authentication card includes acquired network information of the public network,

The measurement information may include information reported by the authentication card and the cloud SIM card in the cloud communication terminal. The measurement information is preferentially reported over the data channel of the cloud SIM card. Where the data channel of the cloud SIM card fails, the measurement information is reported over the data channel of the authentication card. Where the data channel of the cloud SIM card fails, the QoS is not satisfied. In this case, the network handover condition is satisfied, and the handover procedure may be directly initiated.

At 321, the cloud communication server determines, based on the cell location information in the measurement information, whether the cloud communication terminal is within an edge zone of the coverage area of the private network.

In this embodiment, location information of cells in the coverage area of the private network is configured in the cloud communication server, and thus whether the cloud communication terminal is within the coverage area of the private network is determined based on the cell location information in the measurement information reported by the cloud communication terminal.

At 322, in response to determining that the cloud communication terminal is within the edge zone of the coverage area of the private network, the cloud communication server sends a first request for acquiring QoS information to the cloud communication terminal, and acquires the QoS information acquired by the cloud communication terminal based on the first request.

That is, the cloud communication terminal needs to acquire the QoS information by network speed testing, and determine whether a QoS requirement is satisfied. During handover between other public networks and private networks, in the case that a plurality of public network operators are present, a most suitable public network operator is determined by means of network speed testing of the cloud communication terminal.

Both network speed testing and acquisition of the QoS information are carried out in the source network. That is, in this embodiment, the cloud SIM card carries out network speed testing on the private network.

At 323, the cloud communication server determines whether the QoS information is greater than a predetermined threshold, and determines that the cloud communication terminal satisfies the network handover condition in response to determining that the QoS information is not greater than the predetermined threshold.

In practice, for communication quality, at the edge zone, the cloud communication server communicates with the cloud communication terminal, such that the QoS information of the cloud communication terminal in the private network is acquired.

It may be understood that in this embodiment, the signal strength (for example, RSRP) of the cloud SIM card triggers QoS measurement. The QoS measurement is a result of a test between the cloud communication terminal and a network speed testing platform (the network speed testing platform may be the cloud communication server or may be a third-party network speed testing platform), including uplink and downlink rates, delays, jitters, packet loss, and the like QoS information. The QoS measurement is constantly carried out via a channel of the cloud SIM card. In this case, the cloud SIM card corresponds to a card of the private network.

At 324, in response to determining that the cloud communication terminal satisfies the network handover condition, the cloud communication server assigns a cloud SIM card to the cloud communication terminal, such that the cloud communication terminal establishes a data connection in a target network based on the cloud SIM card.

At 325, in response to receiving information indicative of successful establishment of the data connection in the target network from the cloud communication terminal, the cloud communication server releases a cloud SIM card used by the cloud communication terminal in a source network.

In this embodiment, whether the QoS of the cloud communication terminal fails to be continuously ensured due to the coverage area or capacity of the private network is determined based on the cell location information of the data card in the cloud communication terminal, the signal strength, and the network rate, and whether the cloud communication terminal needs to be handed over to the public network is determined based on the reported measurement information. Subsequently, a suitable public network cloud SIM card is assigned to the cloud communication terminal based on the RSRP, PLMN, cell location information, and the like in the measurement information reported by the authentication card, and the cloud communication terminal is handed over from the private network to the public network. In this way, communication quality of the private network is ensured.

Alternatively, in other embodiments, the cloud communication terminal constantly receives the measurement information of the private network reported by the cloud SIM card, and meanwhile receives the measurement information of the public network reported by the authentication card. In this way, based on the periodically reported cell location information, the cloud communication server determines whether the cloud communication terminal approaches the edge zone of the coverage area of the private network by checking the value of the RSRP. In response to determining that the signal strength in the measurement information of the private network is less than a predetermined threshold, the cloud communication server determines whether the signal strength in the measurement information of the public network reported by the authentication card is greater than the signal strength in the private network. In the case that the signal strength in the measurement information of the public network is over 6 dB greater than the signal strength in the private network, the network handover condition is satisfied, the network handover procedure may be initiated, and an operator having a PLMN the same as that of the authentication card is assigned to the cloud communication terminal. In this way, a locally registrable network is ensured.

That is, when the cloud communication terminal exits the coverage area of the private network and reaches the critical zone of the public network, the cloud communication server may determine, based on the cell location information and the signal strength RSRP reported by the cloud communication terminal, that the network handover condition is satisfied. In this case, the cloud communication server further determines, by network speed testing, whether the predetermined QoS is satisfied. In the case that the predetermined QoS is satisfied, the cloud communication terminal continuously uses the private network. In the case that the predetermined QoS is not satisfied, the cloud communication terminal is determined to be handed over from the private network to the public network, and subsequently the network handover is performed.

In this embodiment, where quality of the private network fails to satisfy a predetermined QoS, the cloud communication terminal is handed over from the private network to the public network based on cloud communications. In this way, communication quality is ensured, and hence network quality perceived by users is improved.

Therefore, the method according to the present disclosure effectively reduces communication costs of the cloud communication terminal while ensuring communication quality of the cloud communication terminal in handover from the private network to the public network.

### Third Embodiment

FIG. 4 illustrates a schematic flowchart of a method for handover between a private network and a public network based on cloud communications according to an embodiment of the present disclosure. The method may be performed at a cloud communication terminal, and may include the following steps.

At 401, a cloud communication terminal periodically reports measurement information to a cloud communication server, such that the cloud communication server determines, based on the measurement information and a network used by the cloud communication terminal, whether the cloud communication terminal satisfies a network handover condition.

At 402, in response to determining that the cloud communication terminal satisfies the network handover condition, the cloud communication terminal receives network handover information from the cloud communication server, wherein the network handover information contains a cloud SIM card for data communication in a target network.

At 403, the cloud communication terminal establishes a data connection in the target network based on the cloud SIM card, and sends information indicative of successful establishment of the data connection to the cloud communication server upon the successful establishment of the data connection, such that the cloud communication server releases a cloud SIM card used by the cloud communication terminal in a source network.

The cloud communication terminal is provided with an authentication card for sending authentication information and at least one cloud SIM card for data communication.

The cloud communication terminal establishes the data connection in the target network based on the cloud SIM card, and in response to a failure to establish the data connection, receives, from the cloud communication server over a data channel of the authentication card, information indicative of enabling a cloud SIM card for data communication in the source network to establish a data connection in the source network.

The cloud communication terminal establishes the data connection in the source network based on the cloud SIM card in the information.

The cloud SIM card for data communication in the source network is a card suspended by the cloud communication server prior to successful network handover of the cloud communication terminal.

In one handover mode, when the source network is the public network and the target network is the private network, periodically reporting, by the cloud communication terminal, the measurement information to the cloud communication server may include:
in response to approaching a coverage area of the private network, receiving, by the cloud communication terminal, information of an n^{th} time interval for reporting the measurement information from the cloud communication server, and reporting the measurement information to the cloud communication server based on the n^{th} time interval, wherein the n^{th} time interval is determined by the cloud communication server according to a distance between a cell where the cloud communication terminal is located and a coverage area of the private network, and n is an natural number greater than 0.

In another handover mode, the source network is the private network and the target network is the public network; and upon periodically reporting, by the cloud communication terminal, the measurement information to the cloud communication server, the method further includes:
in response to determining that the cloud communication terminal is within an edge zone of a coverage area of the private network, receiving from the cloud communication server, by the cloud communication terminal, a first request for acquiring QoS information, and interacting with the cloud communication server based on the first request, such that the cloud communication server acquires the QoS information of a data connection of the cloud communication terminal and the cloud communication server determines, based on the QoS information, whether the cloud communication terminal satisfies the network handover condition.

In the embodiments of the present disclosure, the cloud communication server is a generic term, which may also be a private network base station of an operator. The technical solutions are likewise practiced for a terminal serviced by the private network base station with reference to the methods as illustrated in FIG. 1 to FIG. 4. Such solution variants are all within the scope of the embodiments of the present disclosure. That is, with respect to data communication via the private network base station, data communication may also be handed over between a plurality of private networks and public networks, so as to reduce communication expenses and improve communication quality of the private network.

In addition, the private network in FIG. 1 to FIG. 4 may also be another public network. The method according to the present disclosure may also be applicable to network handover between two public networks. Such solution variants are all within the scope of the embodiments of the present disclosure.

### Fourth Embodiment

This embodiment provides a cloud communication server. The cloud communication server includes: a memory, a processor, and a card pool.

One or more programs are stored in the memory, the processor is configured to run the one or more programs stored in the memory, a plurality of cloud SIM cards are stored in the card pool, and the cloud SIM cards are called and assigned by the processor to the cloud communication terminal for data communication in a target network.

The processor, when loading and running the one or more programs, is caused to perform the method according to any of the first to third embodiments.

In addition, an embodiment of the present disclosure provides a cloud communication terminal. The cloud communication terminal includes: a memory and a processor.

One or more programs are stored in the memory, and the processor, when loading and running the one or more programs stored in the memory, is caused to perform the method as described in any of the above embodiments.

By interactions between the cloud communication terminal according to this embodiment and the cloud communication server according to the above embodiment, handover between the private network and the public network is implemented, and a plurality of private networks and a plurality of public networks are seamlessly connected. In this way, networking of the private network and the public network is achieved without reaching any roaming protocol between the private network and the public network.

In one aspect, the network provided by a private network base station is used based on the cloud communications technologies. The cloud communication terminal is handed over to the private network in response to entering the coverage area of the private network, and is handed over to the public network in response to exiting the coverage area of the private network. In this way, networking costs of the public network and communication costs of the cloud communication terminal are reduced.

In another aspect, where quality of the private network fails to satisfy a predetermined QoS, the cloud communication terminal is handed over from the private network to the public network based on cloud communications. In this way, communication quality is ensured, and hence network quality perceived by users is improved.

Therefore, the method according to the present disclosure effectively reduces communication costs of the cloud communication terminal while ensuring communication quality of the cloud communication terminal in handover from the private network to the public network.

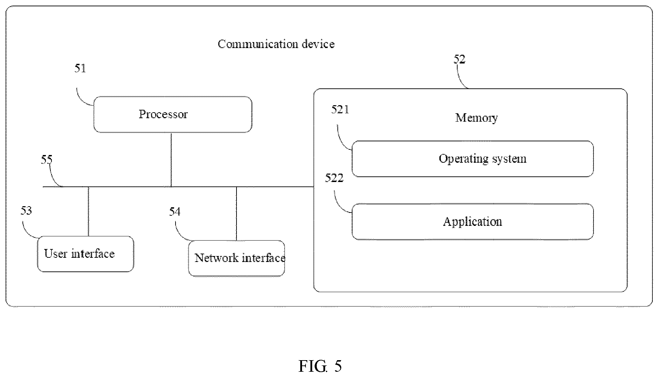

The cloud communication server and the cloud communication terminal in the above embodiments are both communication devices, which are applicable to the structure of a communication device as illustrated in FIG. 5. As illustrated in FIG. 5, the communication device may include: at least one processor 51, at least one memory 52, at least one network interface 54, and/or other user interfaces 53. The components in the communication device are coupled together via a bus system 55. It may be understood that the bus system 55 is configured to implement connections and communications between these components. In addition to a data bus, the bus system 55 may further include a power bus, a control bus, and a state signal bus. However, for clarity of description, various buses are all marked as the bus system 55 in FIG. 5.

In this embodiment, the communication device may perform the methods as illustrated in FIG. 1 to FIG. 4. The user interface 53 may include a display, a keyboard or keypad, or a click or tap device (for example, a mouse or a touch panel).

It may be understood that the memory 52 may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM), which serves as an external high-speed cache. Through exemplary but not limitative description, many forms of RAMs may be used, for example, a static random-access memory (SRAM), a dynamic random-access memory (DRAM), a synchronous dynamic random-access memory (SDRAM), a double data speed synchronous dynamic random-access memory (DDR SDRAM), an enhanced synchronous dynamic random-access memory (ESDRAM), a synchronous dynamic random-access memory (SLDRAM), and a direct rambus dynamic random-access memory (DR RAM). The memory 52 described herein is intended to include, but is not limited to, these memories and any other suitable types of memories.

In some embodiments, the memory 52 stores the following elements: executable units or data structures, or subsets thereof, or extension sets thereof; an operating system 521, and an application 522.

The operating system 521 includes various system programs, for example, framework layers, core layers, drive layers, and the like, for implementing various infrastructure services and processing hardware-based tasks. The application 522 includes various applications, for example, media players, browsers, and the like, for implementing various application services. The programs for implementing the methods according to the embodiments of the present disclosure may be included in the application 522.

In the embodiments of the present disclosure, the processor 51, when loading and executing programs or instructions stored in the memory 52 (or the programs and instructions stored in the application 522), is caused to perform the steps of the methods according to the first aspect.

The methods according to the embodiments of the present disclosure may be applicable to the processor 51 or may be implemented by the processor 51. The processor 51 may be an integrated circuit chip, and has capabilities of processing signals. During the implementation, various steps in the above method may be performed by means of an integrated logic circuit in the processor 51 or by means of instructions. The processor 51 may be a general processor, a digital signal processor (DSP), an application-specific integrated circuit (ASIC), a field programmable gate array (FPGA) or another programmable logic device, a discrete gate or transistor logic device, or a discrete hardware component. The processor 51 is capable of implementing or performing the methods, steps and logic block diagrams in the embodiments of the present disclosure. The general-purpose processor may be a microprocessor or any customary processor or the like. The steps in the method according to the embodiments of the present disclosure may be directly reflected as being practiced by a decoding processor, or practiced by a software unit plus hardware in the decoding processor in the decoding processor. The software unit may be stored in a random memory, a flash memory, a read-only memory, a programmable read-only memory, an electrically erasable programmable memory, a register or the like storage medium commonly known in the art. The storage medium is within the memory 52. The processor 51 reads the information stored in the memory 52 and performs the steps of the above method in combination with the hardware thereof.

In another aspect, an embodiment of the present disclosure further provides a computer-readable storage medium storing one or more computer programs therein, wherein the one or more computer programs, when loaded and run on a processor, causes the processor to perform the method for handover between the private network and the public network based on cloud communications according to any of the above embodiments.

It may be understood that the embodiments herein may be practiced by hardware, software, firmware, middleware, microcode or a combination thereof. For practice of hardware, the processing unit may be practiced in one or more application-specific integrated circuits (ASICs), digital signal processors (DSPs), digital signal processing devices (DSPDs), programmable logic devices (PLDs), field programmable gate arrays (FPGAs), general-purpose processors, controllers, micro-controllers, microprocessors, or other electronic units or a combination thereof for performing the above-described methods.

For implementation in terms of software, the technical solutions according to the present disclosure may be implemented by performing the functional units herein. The software code may be stored in the memory and executed by the processor. The memory may be implemented in the processor or outside the processor.

A person skilled in the art may envisage that various exemplary units and algorithm steps described with reference to the embodiments of the present disclosure given herein may be practiced in the form of electronic hardware or a combination of computer software and electronic hardware. Whether such functions are implemented in the form of software or hardware depends on the specific application and the design restrictions applied to the entire system. Professional technical personnel may implement the described functions by using different methods for each specific application. However, such implementation shall not be deemed as going beyond the scope of the present disclosure.

A person skilled in the art would clearly acknowledge that for ease and brevity of description, the specific operation processes of the above described systems, apparatuses and units may be referenced to the relevant portions in the above described method embodiments, which are thus not described herein any further.

It should be understood that the steps according to the embodiments of the present disclosure, unless otherwise specified, are performed in any order according to actual needs. The disclosed apparatus and method may be practiced in other manners. The above described device embodiments are merely illustrative. For example, the unit division is merely logical function division and may be other divisions in actual practice. For example, multiple units or components may be combined or integrated into another device, or some features can be ignored or not performed. In addition, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the case that the functions are implemented in a form of a software functional unit and sold or used as an independent product, the units may be stored in a computer readable storage medium. Based on such understanding, the technical solutions of the present disclosure essentially, or the part contributing to the related art, or a part of the technical solutions may be implemented in a form of a software product. The computer software product is stored in a storage medium and includes several instructions to cause a computer device (which may be a personal computer, a server, a network device, or the like) to perform all or some of steps of the methods described in the embodiments of the present disclosure.

It should be noted that, in this specification, terms "comprises," "include," "contain," and any other variations thereof are intended to cover a non-exclusive inclusion, such that a process, method, article, or apparatus, that comprises, has, includes, or contains a list of elements does not include only those elements but may include other elements not expressly listed or inherent to such process, method, article, or apparatus. An element proceeded by "comprises...a," "has...a," "includes...a," or "contains...a" does not, without more constraints, preclude the existence of additional identical elements in the process, method, article, or apparatus.

In addition, those skilled in the art shall understand that, although some embodiments described herein include some features included in other embodiments, rather than other features, a combination of the features in different embodiments signifies that the features are within the scope of the present disclosure and different embodiments may be derived.

Although some exemplary embodiments of the present disclosure are described with reference to the accompanying drawings, a person skilled in the art would make various modifications and variations without departing from the spirit and the scope of the present disclosure. Such modifications and variations shall be considered as falling within the scope defined by the appended claims.

## Claims

1. A method for handover between a private network and a public network based on cloud communications, comprising:
101, receiving, by a cloud communication server, measurement information reported by a cloud communication terminal;
102, determining, by the cloud communication server based on the measurement information and a network used by the cloud communication terminal, whether the cloud communication terminal satisfies a network handover condition;
103, in response to determining that the cloud communication terminal satisfies the network handover condition, assigning, by the cloud communication server, a cloud SIM card to the cloud communication terminal, such that the cloud communication terminal establishes a data connection in a target network based on the cloud SIM card; and
104, in response to receiving information indicative of successful establishment of the data connection in the target network from the cloud communication terminal, releasing, by the cloud communication server, a cloud SIM card used by the cloud communication terminal in a source network;
wherein the cloud communication terminal is provided with an authentication card for sending authentication information and at least one cloud SIM card for data communication.

2. The method according to claim 1, wherein when the source network is the public network and the target network is the private network,
receiving, by the cloud communication server, the measurement information reported by the cloud communication terminal comprises:
receiving, by the cloud communication server, measurement information of the public network reported by the cloud SIM card; and/or
receiving, by the cloud communication server, measurement information of the public network reported by the authentication card;
wherein the measurement information comprises cell location information and signal strength.

3. The method according to claim 1 or 2, wherein when the source network is a public network and the target network is a private network,
determining, by the cloud communication server based on the measurement information and the network used by the cloud communication terminal, whether the cloud communication terminal satisfies the network handover condition comprises:
1021, determining, by the cloud communication server based on cell location information in the measurement information, whether the cloud communication terminal is within a coverage area of the private network, and
1022, in response to determining that the cloud communication terminal is within the coverage area of the private network, determining, by the cloud communication server, that the cloud communication terminal satisfies the network handover condition;
or,
102-1, determining, by the cloud communication server based on the cell location information in the measurement information, whether the cloud communication terminal is within the coverage area of the private network,
102-2, in response to determining that the cloud communication terminal is within the coverage area of the private network, acquiring, by the cloud communication server, measurement information of the private network reported by the cloud communication terminal, and
102-3, determining, by the cloud communication server, signal strength in the measurement information of the private network is greater than a first strength value/signal strength in measurement information of the public network, and determining, by the cloud communication server, that the cloud communication terminal satisfies the network handover condition in response to determining that the signal strength is greater than the first strength value/the signal strength in the measurement information.

4. The method according to claim 3, wherein determining, by the cloud communication server based on the cell location information in the measurement information, whether the cloud communication terminal is within the coverage area of the private network comprises:
1020a, in response to determining, based on the cell location information in the measurement information, that the cloud communication terminal is within a peripheral zone of the coverage area of the private network, sending to the cloud communication terminal, by the cloud communication server, information of a first time interval for reporting the measurement information,
1020b, receiving, by the cloud communication server, the measurement information reported by the cloud communication terminal based on the first time interval, and sending, to the cloud communication terminal, information of a second time interval for reporting the measurement information in response to determining, based on the measurement information, that the cloud communication terminal is within a critical zone between a coverage area of the public network and the coverage area of the private network,
1020c, receiving, by the cloud communication server, the measurement information reported by the cloud communication terminal based on the second time interval, and sending, to the cloud communication terminal, information of a third time interval for reporting the measurement information in response to determining, based on the measurement information, that the cloud communication terminal is within an edge zone of the coverage area of the private network, and
1020d, receiving, by the cloud communication server, the measurement information reported by the cloud communication terminal based on the third time interval, and determining, based on the measurement information, whether the cloud communication terminal is within the coverage area of the private network,
wherein the first time interval is greater than the second time interval, and the second time interval is greater than the third time interval;
or,
1020a', in response to determining, based on the cell location information in the measurement information, that the cloud communication terminal is within a peripheral zone of the coverage area of the private network, sending to the cloud communication terminal, by the cloud communication server, information of a first time interval for reporting the measurement information,
1020b', receiving, by the cloud communication server, the measurement information reported by the cloud communication terminal based on the first time interval, and sending, to the cloud communication terminal, information of a second time interval for reporting the measurement information in response to determining, based on the measurement information, that the cloud communication terminal is within a critical zone between the coverage area of the public network and the coverage area of the private network, and
1020c', receiving, by the cloud communication server, the measurement information reported by the cloud communication terminal based on the second time interval, and determining, based on the measurement information, whether the cloud communication terminal is within the coverage area of the private network.

5. The method according to claim 1, wherein when the source network is the private network and the target network is the public network,
receiving, by the cloud communication server, the measurement information reported by the cloud communication terminal comprises:
receiving, by the cloud communication server, measurement information of the private network reported by the cloud SIM card; and/or
receiving, by the cloud communication server, measurement information of the public network reported by the authentication card;
wherein the measurement information comprises cell location information and signal strength.

6. The method according to claim 1 or 5, wherein when the source network is the private network and the target network is the public network,
determining, by the cloud communication server based on the measurement information and the private network used by the cloud communication terminal, whether the cloud communication terminal satisfies the network handover condition comprises:
determining, by the cloud communication server according to cell location information in the measurement information, whether the cloud communication terminal is within an edge zone of a coverage area of the private network;
in response to determining that the cloud communication terminal is within the edge zone of the coverage area of the private network, sending, by the cloud communication server, a first request for acquiring QoS information to the cloud communication terminal, and acquiring the QoS information acquired by the cloud communication terminal based on the first request; and
determining, by the cloud communication server, whether the QoS information is greater than a predetermined threshold, and determining that the cloud communication terminal satisfies the network handover condition in response to determining that the QoS information is not greater than the predetermined threshold.

7. The method according to claim 1, further comprising:
in response to a failure to receive the information indicative of the successful establishment of the data connection in the target network fed back by the cloud communication terminal within a first predetermined time period upon assignment of the cloud SIM card, sending to the cloud communication terminal, by the cloud communication server, information indicative of enabling a cloud SIM card for data communication in the source network to establish a data connection in the source network, such that the cloud communication terminal continuously uses the source network; and
suspending, by the cloud communication server, the cloud SIM card for data communication in the source network in the cloud communication terminal prior to successful network handover of the cloud communication terminal.

8. The method according to claim 7, further comprising:
stopping, by the cloud communication server, network handover within a second predetermined time period upon a failure of network handover.

9. A method for handover between a private network and a public network based on cloud communications, comprising:
periodically reporting, by a cloud communication terminal, measurement information to a cloud communication server, such that the cloud communication server determines, based on the measurement information and a network used by the cloud communication terminal, whether the cloud communication terminal satisfies a network handover condition;
in response to determining that the cloud communication terminal satisfies the network handover condition, receiving, by the cloud communication terminal, network handover information from the cloud communication server, wherein the network handover information contains a cloud SIM card for data communication in a target network; and
establishing, by the cloud communication terminal, a data connection in the target network based on the cloud SIM card, and sending information indicative of successful establishment of the data connection to the cloud communication server upon the successful establishment of the data connection, such that the cloud communication server releases a cloud SIM card used by the cloud communication terminal in a source network;
wherein the cloud communication terminal is provided with an authentication card for sending authentication information and at least one cloud SIM card for data communication.

10. The method according to claim 9, wherein
when the source network is the public network and the target network is the private network,
periodically reporting, by the cloud communication terminal, measurement information to the cloud communication server comprises:
in response to approaching a coverage area of the private network, receiving, by the cloud communication terminal, information of an n^{th} time interval for reporting the measurement information from the cloud communication server, and reporting the measurement information to the cloud communication server based on the n^{th} time interval, wherein the n^{th} time interval is determined by the cloud communication server according to a distance between a location of the cloud communication terminal indicated by the cell location information and a coverage area of the private network;
wherein n is a natural number greater than 0.

11. The method according to claim 9, wherein when the source network is the private network and the target network is the public network,
upon periodically reporting, by the cloud communication terminal, the measurement information to the cloud communication server, the method further comprises:
in response to determining that the cloud communication terminal is within an edge zone of a coverage area of the private network, receiving from the cloud communication server, by the cloud communication terminal, a first request for acquiring QoS information, and interacting with the cloud communication server based on the first request, such that the cloud communication server acquires the QoS information of a data connection of the cloud communication terminal and the cloud communication server determines, based on the QoS information, whether the cloud communication terminal satisfies the network handover condition.

12. The method according to claim 9, further comprising:
establishing, by the cloud communication terminal, the data connection in the target network based on the cloud SIM card, and in response to a failure to establish the data connection, receiving, from the cloud communication server over a data channel of the authentication card, information indicative of enabling a cloud SIM card for data communication in the source network to establish a data connection in the source network; and
establishing, by the cloud communication terminal, the data connection in the source network according to the cloud SIM card indicated in the information;
wherein the cloud SIM card for data communication in the source network is a card suspended by the cloud communication server prior to successful network handover of the cloud communication terminal.

13. A cloud communication server, comprising: a memory, a processor, and a card pool; wherein
one or more programs are stored in the memory, the processor is configured to run the one or more programs stored in the memory, a plurality of cloud SIM cards are stored in the card pool, and the cloud SIM cards are called and assigned by the processor to the cloud communication terminal for data communication in a target network; and
the processor, when loading and running the one or more programs, is caused to perform the method as defined in any one of claims 1 to 8.

14. A cloud communication terminal, comprising: a memory and a processor; wherein
one or more programs are stored in the memory, and the processor, when loading and running the one or more programs stored in the memory, is caused to perform the method as defined in any one of claims 9 to 12.
